Europäisches Patentamt

European Patent Office

Office européen des brevets

(11) Publication number: **0 084 955**
**B1**

(12) **EUROPEAN PATENT SPECIFICATION**

(45) Date of publication of patent specification: **02.04.86**

(21) Application number: **83300277.7**

(22) Date of filing: **20.01.83**

(51) Int. Cl.⁴: **B 60 R 22/34**

(54) Inertia reel.

(30) Priority: 26.01.82 GB 8202103

(43) Date of publication of application:
**03.08.83 Bulletin 83/31**

(45) Publication of the grant of the patent:
**02.04.86 Bulletin 86/14**

(84) Designated Contracting States:
**DE GB IT SE**

(56) References cited:
**DE-A-2 624 314**
**GB-A-1 329 009**

(73) Proprietor: **BRITAX (WINGARD) LIMITED**
**Chandler Road**
**Chichester West Sussex PO19 2UG (GB)**

(72) Inventor: **Cunningham, Douglas James**
**"Sambourne" 4 Church Close Dunton Bassett**
**Lutterworth Leicestershire LE16 5JY (GB)**

(74) Representative: **Hollinghurst, Antony**
**Britax Division (Patents) Kingsham Road**
**Chichester West Sussex PO19 2UG (GB)**

Courier Press, Leamington Spa, England.

## Description

This invention relates to inertia reel devices for vehicle safety belts of the type in which a single element senses both vehicle acceleration (i.e sudden retardation or lateral movement in any horizontal direction) and webbing acceleration (i.e. a sudden "snatch" on the safety belt harness).

GB—A—1329009 corresponding to the features of the pre-characterising part of claim 1 discloses an inertia reel device of this type in which the inertia sensor comprises a runner ring suspended from a perpendicular groove in one end of the · reel spindle. The inner periphery of the ring can be provided with gear teeth which mesh with the corresponding teeth in the groove of the reel spindle. The effect of horizontal acceleration is to cause the ring to pivot on the spindle and, since relative angular movement is controlled by the gear teeth, the result is that the runner ring rises relative to the reel spindle. Similarly, sudden acceleration of the spindle, due to a "snatch" on the harness, causes the ring to lock behind the spindle with the result, once again, that the ring rises relative to the spindle. In either case this rising movement is sensed by wire loops which hang over the bottom of the ring so as to be lifted thereby.

The various standard specifications for inertia reels specify both a minimum angle through which the entire reel device may be tilted relative to its orientation of normal use before locking takes place and a maximum angle of tilt before which locking must have taken place. It is therefore, desirable for the actual angle of tilt at which locking takes place to be substantially the same in all horizontal directions. The present invention is concerned with the provision of an inertia reel device in which this is achieved.

According to the invention, an inertia reel device for a vehicle safety belt comprises a shaft on which part of the safety belt is wound, a gear wheel coupled to the shaft, a ring of greater internal diameter than the external diameter of the gear wheel and having gear teeth on a central zone of its inner periphery adapted to mesh with the teeth of the gear wheel, support means having two part-spherical support surfaces disposed adjacent to, and one on each side of, the part of the edge of the gear wheel which is uppermost when the reel device is in its normal orientation, each part-spherical surface having a radius equal to that of the outer zones of the inner periphery of the ring and being bounded by an edge such that the ring is supported on at least one of said surfaces when the reel is tilted at an angle relative to its normal orientation which does not exceed a predetermined tilt angle and that the ring is supported on said edge when said tilt angle is exceeded, the device further comprising sensing means for initiating locking of the reel spindle against rotation in the unwinding direction when the ring is supported on said edge out of contact with the rest of said support surfaces.

Preferably, the sensing means is arranged to engage with the ring adjacent to the invention the sensing means comprises a lever having one end resting on the outer periphery of said ring.

An embodiment of the invention will now be described by way ofple, with reference to the accompanying drawings, in which,

Figure 1 is a longitudinal cross-sectional view of an inertia reel in accordance with the invention,

Figure 2 is cross-sectional view taken on the line 2—2 in Figure 1,

Figure 3 is a cross-sectional view taken on the line 3—3 in Figure 1, and

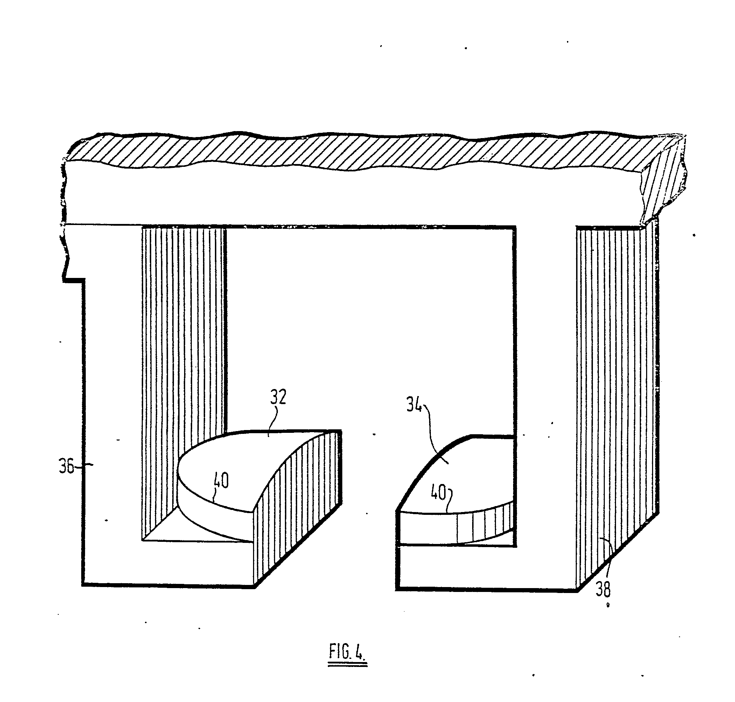

Figure 4 is a scrap perspective view of the support means for the sensing ring of the inertia reel shown in Figure 1, with the gear wheel and ring removed.

Referring to the drawings, an inertia reel comprises a U-shaped support frame 10 having a spindle 12 journaled in holes in the limbs of the U-shape. The spindle 12 has a central bore 14 communicating with a slot 16 in the periphery thereof. In use, the loop formed in one end of the safety belt is inserted through the slot 16 and retained by a rod (not shown) inserted through the bore 14. One end of the spindle 12 is coupled to a conventional rewind spring 18.

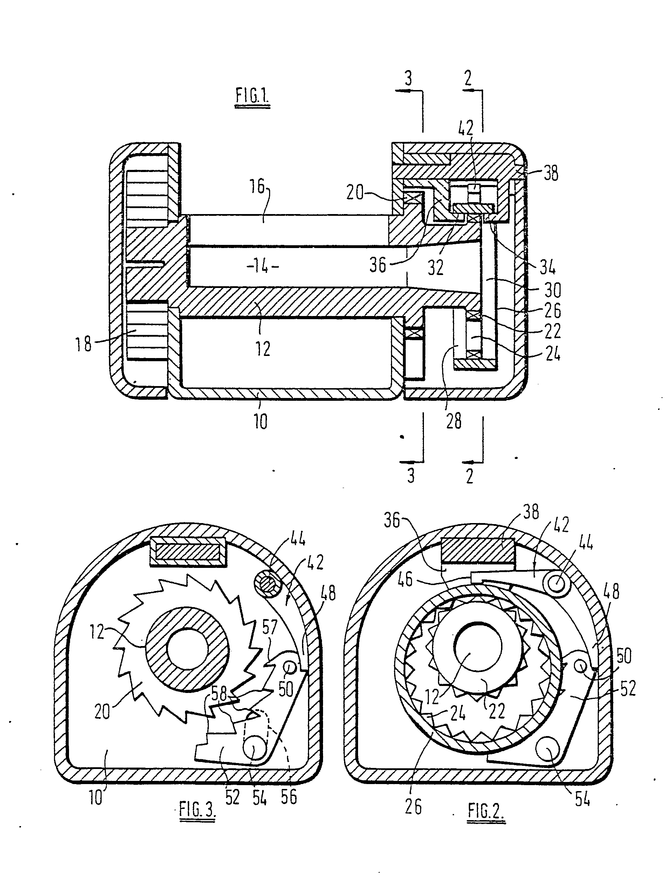

The other s a ratchet wheel 20 with which the main locking pawl engages, as will be explained hereinafter, and a gear wheel 22. As can best be seen from Figures 1 and 3, the teeth of the gear wheel 22 engage with a corresponding set of gear teeth formed on a central zone 24 of the inner periphery of a ring 26 which has a substantially greater internal diameter than the external diameter of the gear wheel 22. On each side of this central zone 24, the inner periphery of the ring 26 has two smooth side zones 28 and 30 which are supported on respective support surfaces 32 and 34, one on each side of the gear wheel 22. The support surfaces 32 and 34 are formed on respective mee curved both in the direction parallel to and the direction perpendicular to the axis of the spindle 12. The radius of curvature in both directions is equal to the radius of the outer zones 28 and 30 of the inner periphery of the ring 26. On all sides except that confronting the gear wheel 22, each of the surfaces 32 and 34 is bounded by a respective edge 40 which comprises the locus of the intersection of the surfaces 32 and 34 with a perpendicular line through the centre of curvature of the ring 26 when the inertia reel is first tilted to an angle at which locking is to be initiated and then rotated through 360° about a vertical axis. Thus, until such tilt angle is reached, the centre of gravity of the ring 26 is directly below the support surfaces 32 and 34 and consequently the ring does not move relative to the support surfaces 32 and 34. On the other hand, when this tilt angle is exceeded, the ring 26 pivots on the edge 40 of one or both of the support surfaces 32 and 34 depending on the direction of the tilt.

Turning now to Figure 2, a lever 42 is pivoted at 44 on the frame 10 and has one end 46 resting on the outer periphery of the ring 26 between the support surfaces 32 and 34. The other end 48 of the lever 42 engages with a projection 50 on one end of a pawl 52 which is supported by a pivot pin 54 in a slot 56 in a frame 10 (Figure 3). Thus, when the ring 26 pivots on one or both of the edges 40, the end 46 of the lever 42 is lifted so that the other end 48 thereof presses the projection 50 inwards, fringing an adjacent tooth 57 on the pawl 52 into engagement with the ratchet wheel 20.

Rotation of the shaft 12 in the unwinding direction thus causes the ratchet wheel to lift the tooth 56 so that the pin 54 moves upwards in the slot 56 so that a plurality of main locking teeth 58 on the pawl 52 engage with the ratchet wheel 20 to lock the spindle 12.

In use, when the ratchet is subject to horizontal acceleration exceeding a predetermined threshold, the ring is displaced horizontally, pivoting on one or other of the edges 40 to initiate the above-described locking action. Similarly, if the spindle 12 is subject to sudden acceleration in the unwinding direction due to a snatch on the safety belt, the ring 26 tends to lag behind the gear wheel 22 with the result that the point at which its teeth engage with those of the gear wheel is no longer coincident with the zone between the support surfaces 32 and 34. Consequently, the end 46 of the lever 42 is, once again lifted to initiate locking. As soon as the ring 26 swings back to its normal position, the pawl 52 is free to disengage when the tension in the safety belt is removed, allowing the spindle 12 to rotate in the retraction direction sufficiently to let the pin 54 move back to the bottom of the slot 56.

Preferably, the lever 42 and the pawl 52 are balanced so that their centres of gravity are coincident with their respective pivot pins 44 and 54 in order to ensure that they are not themselves subject to the effects of acceleration in any direction.

### Claims

1. An inertia reel device for a vehicle safety belt comprises a shaft (12) on which part of the safety belt is wound, a gear wheel (22) coupled to the shaft (12), a ring (26) of greater internal diameter than the external diameter of the gear wheel (22) and having gear teeth on its inner periphery adapted to mesh with the teeth of the gear wheel (22), and sensing means (42) for initiating locking of the reel spindle when the ring (26) is displaced from the position in which the uppermost part of its inner periphery is in contact with the gear wheel (22) characterised in that support means (36, 38) having two part-spherical support surfaces (32, 34) are disposed adjacent to, and one on each side of, the part of the edge of the gear wheel (22) which is uppermost when the reel device is in its normal orientation, each part-spherical surface (32, 34) having a radius equal to that of the outer zones of the inner periphery of the ring and being bounded by an edge (40) such that the ring is supported on at least one of said surfaces (32, 34) when the reel is tilted at an angle relative to its normal orientation which does not exceed a predetermined tilt angle and that the ring is supported on said edge (40) when said tilt angle is exceeded, and the sensing means is arranged to initiate locking of the shaft (12) against rotation in the unwinding direction when the ring (26) is supported on said edge (40) out of contact with the rest of said support surfaces (32, 34).

2. An inertia reel device according to claim 1, characterised in that the sensing means (42) comprises a follower (46) arranged to engage with the part of the outer periphery of the ring which is uppermost when the reel device is in its normal orientation.

3. An inertia reel device according to claim 2, characterised in that the follower (46) comprises one arm of a two-arm lever, the other arm (48) of which is coupled to locking means (52).

4. An inertia device according to claim 3, characterised in that the locking means comprises a ratchet wheel (26) coupled to the shaft (12) and a pawl (52) with a plurality of teeth (57, 58) supported on a pin-and-slot pivotal mounting (54, 56) which is so arranged that, when the pawl has been pivoted by the second arm of the two-arm lever to bring one tooth (57) thereof into engagement with the ratchet wheel (20), further rotation of the ratchet wheel (20) in the direction restrained by the pawl brings the remaining teeth (58) into engagement.

### Revendications

1. Une bobine d'inertie pour une ceinture de sécurité de véhicule qui comprend un arbre (12) sur lequel une partie de la ceinture de sécurité est enroulée, une roue dentée (22) accouplée à l'arbre (12), une bague (26) de diamètre interne supérieur au diamètre externe de la roue dentée (22) et présentant des dents d'engrenage sur son contour intérieur destinées à venir en prise avec les dents de la roue dentée (22), et des moyens de détection (42) pour amorcer le verrouillage de l'axe de la bobine, lorsque la bague (26) est déplacée à partir d'une position dans laquelle la partie la plus haute de son contour intérieur est en contact avec roue dentée (22), caractérisée en ce que des moyens (36, 38) présentant deux surfaces de support, en partie sphérique (32, 34), sont disposés en étant adjacents et de part et d'autre, de la partie du bord de la roue dentée (22) qui est la plus haute lorsque la bobine est dans son orientation normale, chaque surface, en partie sphérique (32, 34), ayant un rayon égal celui des surfaces extérieures du contour intérieur de la bague et étant entourée par un bord (40) de telle sorte que la bague soit supportée au moins sur une desdites surfaces (32, 34) lorsque la bobine est basculée d'un certain angle par rapport à son orientation normale, qui ne dépasse pas un angle de basculement prédéterminé, et que la bague soit supportée sur ledit bord (40) lorsque ledit angle de basculement est dépassé, et les moyens de détection étant agencés pour amorcer le verrouillage de l'arbre (12) pour empêcher la rotation dans le sens du déroulage, lorsque la bague (26) repose sur ledit bord (40) et n'est plus en contact avec le reste desdites surfaces de support (32, 34).

2. Une bobine d'inertie, selon la revendication 1, caractérisée en ce que les moyens de détection (42) comprennent un palpeur (46) destiné à venir en prise avec la partie de la périphérie extérieure de la bague qui occupe la position la plus haute, quand la bobine est dans son orientation normale.

3. Une bobine d'inertie selon la revendication 2, caractérisée en ce que le palpeur (46) est constitué par l'un des bras d'un levier à deux bras, dont l'autre bras (48) est accouplé aux moyens de verrouillage (52).

4. Une bobine d'inertie selon la revendication 3, caractérisée en ce que les moyens de verrouillage comprennent une roue à rochet (26) accouplée à l'arbre (12) et un cliquet (52) avec une pluralité de dents (57, 58), monté sur un mécanisme de pivotement à goupille et mortaise (54, 56) qui est agencé de telle sorte que, lorsque le cliquet a été basculé par le second bras du levier à deux bras, pour amener une dent (57) de celui-ci en prise avec la roue à rochet (20), toute rotation supplémentaire de la roue à rochet (20) dans la direction freinée par le cliquet, met en prise le reste des autres dents (58).

**Patentansprüche**

1. Trägheitsspulenanordnung für einen Kfz-Sicherheitsgurt, umfassend eine Welle (12), auf der ein Teil des Sicherheitsgurtes aufgewickelt ist, ein Zahnrad (22), das an die Welle (12) gekoppelt ist, einen ring (26) mit einem größeren Innendurchmesser als der Außendurchmesser des Zahnrades (22) und mit Zähnen an seiner Innenumfangsfläche, die mit den Zähnen des Zahnrades (22) kämmen können, und Fühlermittel (42) zum Auslösen des Eingriffs der Spulenwelle, wenn der Ring (26) aus der Position verschoben wird, in welcher der oberste Teil seines Innenumfangs in Kontakt mit dem Zahnrad (22) ist, dadurch gekennzeichnet, daß Haltemittel (36, 38) mit zwei teil-sphärischen Halteflächen (32, 34) jeweils an einer Seite angrenzend im Abschnitt der Kante des Zahnrades (22) angeordnet sind, der oben liegt, wenn die Spulenanordnung in ihrer normalen Orientierung liegt, wobei jede teil-sphärische Fläche (32, 34) einen Radius aufweist, der gleich dem der äußeren Zone des inneren Umfangs des Ringes ist, und wobei jede der Flächen (32, 34) von einer Kante (40) derart begrenzt ist, daß der Ring von wenigstens einer der Flächen (32, 34) unterstützt wird, wenn die Spule um einen Winkel zu ihrer normalen Orientierung gekippt wird, der einen vorbestimmten Kippwinkel nicht übersteigt, und daß der Ring von der Kante (40) unterstützt wird, wenn der Kippwinkel überschritten wird, und daß die Fühlermittel geeignet angeordnet sind um das Festsetzen der Welle (12) gegenüber einer Drehung in Abwickelrichtung dann zu inizieren, wenn der Ring (26) auf der Kante (40) außer Kontakt mit dem Rest der Halteflächen (32, 34) abgestützt ist.

2. Trägheitsspule nach Anspruch 1, dadurch gekennzeichnet, daß die Fühlermittel (42) einen Nachlaufhebel (46) umfassen, der in Eingriff mit einem Abschnitt des äußeren Umfangs des Ringes angeordnet ist, der oben liegt, wenn sich die Spulenanordnung in ihrer normalen Ausrichtung befindet.

3. Trägheitsspule nach Anspruch 2, dadurch gekennzeichnet, daß der Nachlaufhebel (46) einen Arm eines zweiarmigen Hebels umfaßt, dessen anderer Arm (48) mit Sperrmitteln (52) gekoppelt ist.

4. Trägheitsspule nach Anspruch 3, dadurch gekennzeichnet, daß die Sperrmittel ein Sperrzahnrad (26) umfassen, das an die Welle (12) gekoppelt ist, sowie eine Klaue (52) mit einer Vielzahl von Zähnen (57, 58), die an einer Stift/Schlitzschwenkbefestigung (54,56) gelagert ist, die derart angeordnet ist, daß dann, wenn die Klaue durch den zweiten Arm des zweiarmigen Hebel geschwenkt ist, einer ihrer Zähne (57) in Eingriff mit dem Sperrzahnrad (20) gelangt, und eine weitere Drehung des Sperrzahnrades (20) in der durch die Klaue gehaltenen Richtung die übrigen Zähne (58) in Eingriff bringt.

FIG.1.

FIG.2.

FIG.3.

36

32

40

34

40

38

FIG. 4.